# EUROPEAN PATENT SPECIFICATION

(11) **EP 1 887 724 B1**
(45) Date of publication and mention of the grant of the patent: **27.04.2016**
(21) Application number: 06817919.1
(22) Date of filing: 28.11.2006
(51) Int. Cl.: H04J 14/02

(54) **A WAVELENGTH DIVISION MULTIPLEXING PASSIVE OPTICAL NETWORK AND ITS IMPLEMENT METHOD**
PASSIVES, OPTISCHES MULTIPLEXNETZWERK ZUR WELLENLÄNGENAUFTEILUNG UND IMPLEMENTIERUNGSVERFAHREN
RESEAU OPTIQUE PASSIF A MULTIPLEXAGE PAR REPARTITION EN LONGUEUR D'ONDE ET SON PROCEDE DE MISE EN OEUVRE

(30) Priority: 22.12.2005 CN 200510131990
(43) Date of publication of application: 13.02.2008
(73) Proprietor: Huawei Technologies Co., Ltd., Longgang District Shenzhen, Guangdong 518129 (CN)
(72) Inventor: LIU, Yue, Shenzhen, Guangdong Province 518129 (CN)
(74) Representative: Thun, Clemens
(86) International application number: PCT/CN2006/003203
(87) International publication number: WO 2007/071154

(56) References cited:
- EP-A1- 1 635 489
- EP-A2- 0 910 187
- CN-A- 1 447 552
- CN-A- 1 523 803
- CN-A- 1 701 543
- JP-A- 2000 196 536
- US-A1- 2005 276 606
- DENG NING ET AL: "Data remodulation on downstream OFSK signal for upstream transmission in WDM passive optical network", ELECTRONICS LETTERS, IEE STEVENAGE, GB, vol. 39, no. 24, 27 November 2003 (2003-11-27), pages 1741-1743, XP006024459, ISSN: 0013-5194, DOI: 10.1049/EL:20031092
- RONGQING HUI ET AL: "Subcarrier Multiplexing for High-Speed Optical Transmission", JOURNAL OF LIGHTWAVE TECHNOLOGY, IEEE SERVICE CENTER, NEW YORK, NY, US, vol. 20, no. 3, 1 March 2002 (2002-03-01), XP011030141, ISSN: 0733-8724

## Description

This application claims the priority of CN Application NO. 200510131990.3 filed on Dec. 22, 2005, titled "WAVELENGTH DIVISION MULTIPLEXING PASSIVE OPTICAL NETWORK AND IMPLEMENTING METHOD THEREOF".

### Field of the Invention

The present invention relates to the technical field of optical communications and network technology, in particular, to a wavelength division multiplexing passive optical network (WDM-PON) and an implementing method thereof.

### Background of the Invention

An access network refers to the network devices and facilities which provide transmission capability between a core network and a subscriber or between a core network and a customer premise network. The network devices and facilities include an optical line terminal (OLT) and an optical network unit (ONU). The access network may be classified into a wired access network and a wireless access network, and the wired access network mainly includes a copper wire access network, a hybrid fiber-coax (HFC) access network, and a fiber access network etc.

Presently, the rate of the devices on the both side of an access network is increased to more than 1 Gbit/s. Due to the limitation and influences such as the transmission loss, transmission bandwidth and noises, the copper wire access network in the prior art can hardly meet the requirements for the transmission rate in the development of the new telecommunication broadband services, especially in the video applications. The copper wire access network gradually becomes a crucial issue in the development of the broadband Integrated Services Digital Network (ISDN).
An optical access network (OAN) is developed to overcome the defects brought about by the copper wire access network. OAN adopts optical fiber as a main transmission medium. Because of advantages of the optical fiber, such as large capacity, high transmission quality, stable performance, electro magnetic immunity, and high security, and the excellent performance and broad band of the optical access network, which suit the future development of the broadband access most, Fiber to the Home (FTTH) is adopted for realizing the Full Service Access Network.

According as whether the outdoor transmission is passive or active, the OAN may be classified into a passive optical network (PON) and an active optical network (AON). The PON has advantages such as low cost, easy maintenance and transparent for various services. Further, it is easy to expand the capacity and provide services in a PON. Meanwhile, the PON may be smoothly transited to the FTTH. The PON may be classified into a power-split passive optical network (PSPON) and a wavelength-division multiplexing-PON (WDM-PON). The broadband PON (BPON) and the Gigabit PON (GPON) used presently belong to the PSPON. In the PSPON, a star coupler is used to divide optical signals, and time-division multiple address (TDMA) / time-division multiplexing (TDM) is adopted for uplink/downlink transmission so as to realize channel bandwidth sharing. Therefore, the number of the ONU and the transmission rate for accessing the subscriber are limited.

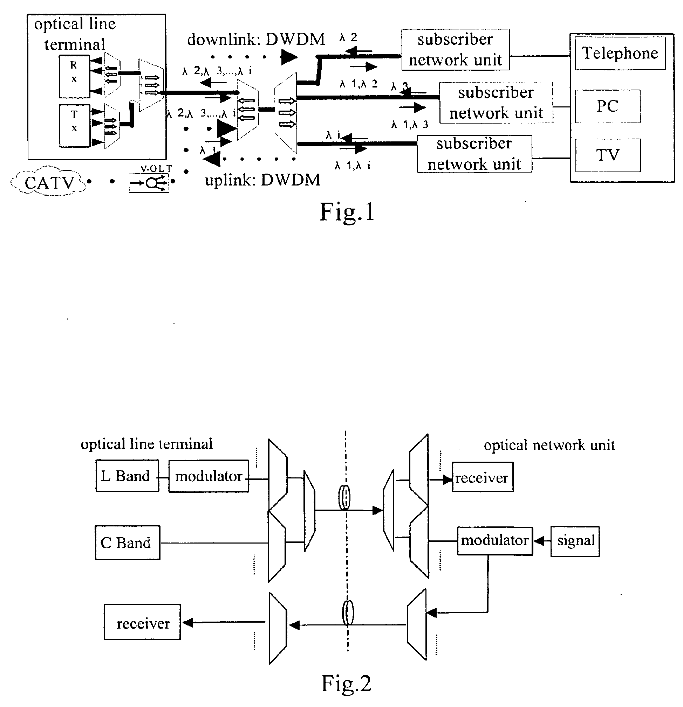

The application architecture of the WDM-PON in the access network is as shown in Figure 1. An optical line terminal (OLT) communicates with different subscriber network units with dense wavelength-division multiplexing (DWDM) technology, and further to realize information exchange with telephone, computer and television set. Furthermore, the OLT side may send a cable television (CATV) signal to the transmission line via an optical multiplexer. In a practical application, due to the difference of the implementing technology, the wavelength range and the method adopted, the topology may be different to some extent, but the function realized is the same: a subscriber ONU needs to receive the information from a central office OLT and upload information; the OLT needs to send information to each ONU, and receive information uploaded by the subscriber.

After an in-depth research, it is found by the inventor that the cost of the optical devices is a main issue that baffles the broad application of the WDM technology during the realization of the WDM-PON. It is required that the laser in the transmitting module of ONU or OLT should output a light with a stable wavelength because an optical demultiplexer is adopted in the optical path. However, due to the refrigeration etc., the present laser with a stable wavelength has a high cost, a large volume and high power consumption. Further, it is expected that the ONU is designed to be independent of wavelength. In other words, an ONU does not need to be limited to working with a particular wavelength, so as to reduce the cost for operation, management, maintenance and capacity enlargement.

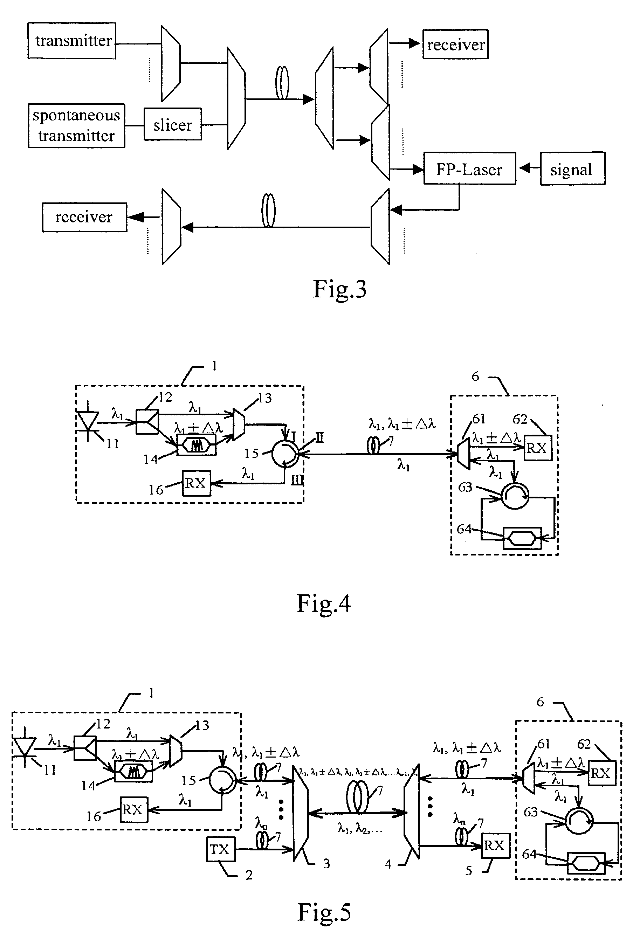

Different methods are adopted in the prior art to realize the ONU independent of wavelength. A widely applied solution is that only a modulator exists in the ONU, and the carrier optical signal is provided via the optical transport network. In this solution, one method is that C band is used for uplink transmission, L band is used for downlink transmission, and the carrier of the C band is also output from the OLT, which loops back from the ONU and acts as an uplink carrier signal. The architecture is as shown in Figure 2. Another method is that a Fabry-Perot (FP) laser is arranged in the ONU, and the network provides wavelength mode-locking. Generally, the mode-locked optical source is generated from sliced broadband amplified spontaneous emission (ASE). The architecture of this method is as shown in Figure 3. In this method, it is still necessary to arrange an optical source module in the ONU.

D1 (EP1635489 A1) discloses an optical wavelength-division multiple access system and a corresponding optical network unit. A wavelength band Da (wavelengths d1 to dn) for downlink optical signals corresponding to the n ONUs, a wavelength band Ua (wavelengths u1 to un) for uplink optical signals corresponding to the n ONUs, a wavelength band Db (wavelengths dn+1 to dn+m) for downlink optical signals corresponding to the m ONUs, and a wavelength band Ub (wavelengths un+1 to un+m) for uplink optical signals corresponding to the m ONUs are set different from one another, the wavelength bands Ua and Ub are set adjacent to each other, and the wavelength bands Ua and Da or the wavelength bands Ub and Db are set adjacent to each other.; Each of the ONUs has downlink optical signal receiving unit for receiving a downlink optical signal of one of the wavelengths d1 to dn+m in the wavelength bands Da and Db which wavelength is assigned to the ONU, and uplink optical signal receiving unit for receiving an uplink optical signal of one of the wavelengths u1 to un+m in the wavelength bands Ua and Ub which wavelength is assigned to the ONU or an uplink optical signal within a broad band including the wavelength bands Ua and Ub.
D2 (JP 2000 196536 A) teaches how to transmit an optical signal bilaterally between a station side unit (OSU) and a user unit (ONU) not having a light source without deteriorating the transmission efficiency with a simple configuration.
D3 (DENG NING ET AL: "Data remodulation on downstream OFSK signal for upstream transmission in WDM passive optical network", ELECTRONICS LETTERS, IEE STEVENAGE, GB) discloses a employment of optical frequency shift keying (OFSK) as the downstream modulation in a WDM passive optical network. The upstream OOK transmitter at the ONU can be realized by remodulating the constant-intensity downstream OFSK signal power with the upstream data. Transmission and remodulation of 2.5 Gbit/s downstream and upstream signals were successfully demonstrated.
D4 (0910 187 A2) discloses a coherent optical system including an optical coupler or combiner (138) for combining a received upstream optical signal and an optical local oscillator signal. The coherent optical system further includes a coherent optical receiver (114) which is configured to receive and process the combined optical signal from the optical coupler to retrieve upstream information from the upstream optical signal.
D5 (PONGQING HUI ET AL: "Subcarrier Multiplexing for High-Speed Optical Transmission") discloses a investigation of the performance of high-speed digital fiber-optic transmission using subcarrier multiplexing (SCM).

### Summary of the Invention

The embodiments of the invention provide a wavelength division multiplexing passive optical network and an implementing method thereof, with which the networking and communication may be implemented with no need of additional laser optical source for the ONU uplink carrier signal.

An embodiment of the invention provides a wavelength division multiplexing passive optical network, including an OLT and at least one ONU. The OLT includes at least one optical transmitting module, the ONU includes an optical receiving module, the optical transmitting module and the optical receiving module have a one to one correspondence;

The optical transmitting module is adapted to split a light with a wavelength of λ, from a same optical source into two optical signals, a first optical signal is modulated and used as a downlink carrier signal, and a second optical signal unchanged loops back from the ONU, and is used as an uplink carrier signal;
wherein the optical transmitting module of the optical line terminal comprises: a shared optical source, an optical splitter, an optical multiplexer, a modulator, a division selector and an optical receiver; wherein,
the optical splitter is adapted to split a continuous light with a wavelength of λ from the optical source into the two optical signals, the first optical signal enters the modulator as the downlink carrier signal, and the second optical signal enters the optical multiplexer directly;
the modulator is adapted to modulate a downlink signal to the first optical signal and then input a modulated downlink signal to the optical multiplexer, where a central wavelength of the modulated downlink signal has an offset of a preset value Δλ compared with a central wavelength of the second optical signal;
the optical multiplexer is adapted to multiplex the modulated downlink signal with the second optical signal, and send a multiplexed signal to the optical network unit via the division selector; and
the optical receiver is adapted to receive an uplink signal sent by the optical network unit via the division selector;

The optical receiving module is adapted to receive the multiplexed signal comprising the modulated downlink signal and the second optical signal from the optical transmitting module, separate the multiplexed signal and use the second optical signal received as the uplink carrier signal to transmit the uplink signal.

Preferably, the OLT further includes a transmitting module which has no shared optical source; the ONU further includes a receiving module corresponding to the transmitting module.

The wavelength division multiplexing passive optical network further includes:
Wavelength division multiplexer and demultiplexer, which are arranged on the OLT side and on the ONU side respectively, and are adapted to perform multiplexing and demultiplexing of the downlink signal or the uplink signal respectively.

An embodiment of the invention provides an OLT, including:
An optical transmitting module, which is adapted to split light with a wavelength of λ from a same optical source into two optical signals, a first optical signal is modulated and used as a downlink carrier signal, and a second optical signal unchanged loops back from an ONU and is used as an uplink carrier signal;
   wherein the optical transmitting module of the optical line terminal comprises: a shared optical source, an optical splitter, an optical multiplexer, a modulator, a division selector and an optical receiver; wherein,
   the optical splitter is adapted to split a continuous light with a wavelength of λ from the optical source into the two optical signals, the first optical signal enters the modulator as the downlink carrier signal, and the second optical signal enters the optical multiplexer directly;
   the modulator is adapted to modulate a downlink signal to the first optical signal and then input a modulated downlink signal to the optical multiplexer, where a central wavelength of the modulated downlink signal has an offset of a preset value Δλ compared with a central wavelength of the second optical signal;
   the optical multiplexer is adapted to multiplex the modulated downlink signal with the second optical signal, and send a multiplexed signal to the optical network unit via the division selector; and
   the optical receiver is adapted to receive the uplink signal sent by the optical network unit via the division selector.

An embodiment of the invention further provides a method for implementing the wavelength division multiplexing passive optical network, including:
Splitting a light with a wavelength of λ from a same optical source into two optical signals at an OLT, taking a first optical signal modulated as a downlink signal after modulation, and taking a second optical signal unchanged as an uplink carrier signal, wherein, after modulation a central wavelength of the modulated first optical signal has an offset of a preset value Δλ compared with a central wavelength of the second optical signal;
Multiplexing the modulated first optical signal with the second optical signal, and sending a multiplexed signal to a receiving module of an ONU;
receiving, by the receiving module of the ONU, the multiplexed signal, and separating the multiplexed signal into the first modulated optical signal and the second optical signal and sending an uplink signal with the second optical signal.

In the solutions provided in the embodiments of the invention, a continuous light is transmitted to an ONU at the same time when a downlink signal is transmitted by an OLT, and the continuous light is used as a carrier for uplink signal transmission. Therefore, no additional optical source generator is needed in the ONU for generating the carrier for the uplink signal. The optical source generator in the ONU may be saved, the cost of the system may be reduced, and the cost for constitution and maintenance may be also reduced. Further, the uplink optical signal and the downlink optical signal use the same optical wavelength range, so the optical fiber bandwidth may be saved.

Moreover, in the embodiments of the invention, the subcarrier modulation is adopted for the downlink signal, whose central wavelength is different from the central wavelength of the uplink signal, so the mutual interference during the transmission in the same optical fiber may be avoided in the low power circumstance.

Further, an all optical detection demodulation is adopted in the subcarrier modulation, so the architecture of the system may be simplified.

### Brief Description of the Drawings

Figure 1 is a diagram showing the architecture of a WDM-PON in the prior art;
Figure 2 is a diagram of a network architecture for realizing the ONU independent of wavelength in the prior art;
Figure 3 is a diagram of another network architecture for realizing the ONU independent of wavelength in the prior art;
Figure 4 is a schematic diagram showing the architecture of the WDM-PON according to an embodiment of the invention;
Figure 5 is a schematic diagram showing the architecture of the WDM-PON according to another embodiment of the invention;
Figure 6a is a spectrum of the signal between the optical multiplexer and the optical demultiplexer in downlink transmission according to an embodiment of the invention;
Figure 6b is a spectrum of the signal between the optical demultiplexer and the ONU in downlink transmission according to an embodiment of the invention;
Figure 7a is a diagram showing the architecture of a solution in which the subcarrier modulated and electronic heterodyne beat-frequency demodulation is adopted according to an embodiment of the invention;
Figure 7b is a diagram showing the architecture of a solution in which the optical detection subcarrier demodulation is adopted according to an embodiment of the invention;
Figure 8 is a diagram showing the cascade architecture between a plurality of OLT transmitting modules and a plurality of ONUs according to an embodiment of the invention;
Figure 9 is a flow chart showing the method for realizing the WDM-PON according to an embodiment of the invention.

### Detailed Description of the Embodiments

The embodiments of the invention are now further illustrated in conjunction with the drawings.

With the embodiments of the invention, a signal transmission between an OLT and a network unit in an access network may be realized As shown in Figure 4, a WDM-PON according to an embodiment of the invention includes: an OLT transmitting module 1 on the OLT side, the OLT transmitting module 1 being able to provide a shared optical source; an ONU receiving module 6 on the ONU side; and a transmission optical fiber segment 7. The ONU receiving module 6 transmits an uplink signal by using the shared optical source provided by the OLT transmitting module 1, and receives a downlink signal. In Figure 4, a unidirectional arrow indicates a single fiber in single direction transmission, and a bidirectional arrow indicates a single fiber dual direction transmission. The wavelength in the downlink transmission is marked above the lines, and the wavelength in the uplink transmission is marked under the lines.

The OLT transmitting module 1 includes: a shared optical source 11 (e.g. a single longitudinal mode continuum optical source), an optical splitter 12, an optical multiplexer 13, a modulator 14, a division selector 15 and an OLT receiver 16. Wherein, the optical splitter 12 may also be a power splitter, which is adapted to split the continuous light transmitted from the optical source 11 into two beams. One beam directly enters the optical multiplexer 13, and the other beam passes through the modulator 14, and then enters the optical multiplexer 13 after a transmission signal is loaded, where the other beam is multiplexed with the one beam of the continuous light that carries no signal. Then, the multiplexed light is output to the port I of a circulator.

A circulator, a device or a system that has the function of dividing and selecting may be adopted as the division selector 15. The circulator is a device which transmits the light in a single direction. The input light enters the circulator from an input port, and is output from a second port II. Similarly, the light that enters the circulator from the second port is reflected to a third port III and outputs.

Generally, the transmission signal from the OLT to the ONU is referred to as downlink signal, and the transmission signal from the ONU to the OLT is referred to as uplink signal.

The ONU receiving module 6 is adapted to implement the receiving of the downlink optical signal and the transmitting of the uplink optical signal. The ONU receiving module 6 includes an optical demultiplexer 61, an ONU receiver 62, a circulator 63 and a modulator 64. The optical demultiplexer 61 is adapted to separate the continuous light with a wavelength of λ from the signal light with a wavelength of λ±Δλ transmitted from the OLT transmitting module 1. The signal light is transmitted to the receiving module for demodulation, and the continuous light is used as the carrier for the uplink signal. The continuous light enters the modulator 64 via port II of the circulator, loaded with the signal to be transported, sent to the transmission line via port III of the circulator, and received by the receiving module 16 when the continuous light returns to the module 1. The receiving module 16 has the function of handling the burst mode. When an ONU of the system receives an instruction from the OLT indicating that the ONU is allowed to send data, the ONU sends data to the designated time slot in the uplink frame in a burst mode. Therefore, the optical transceiver of the ONU should also support the burst transmission mode in addition to fulfilling the requirements for a Gigabit Ethernet optical transceiver. In an ONU optical transceiver, a photodiode PIN receiver is usually adopted for continuous receiving, and an FP laser or a distributed feedback (DFB) laser may be adopted for burst transmitting.

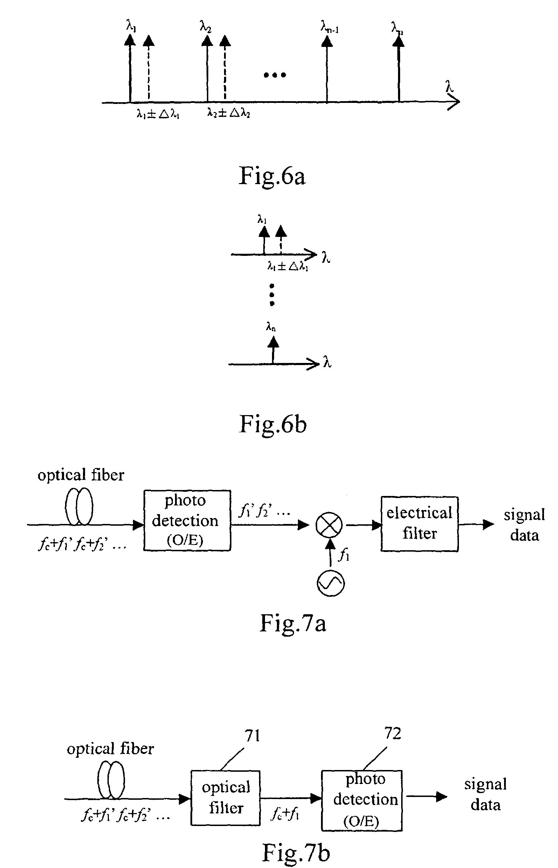

In the above embodiment, only the case that there exists one transmitting unit on the OLT side which corresponds to one ONU is illustrated. In practice, one OLT may correspond to a plurality of ONUs. Therefore, a plurality of transmitting modules may be arranged in the OLU, and a wavelength division multiplexer/demultiplexer may be added, so as to constitute a WDM optical network. Furthermore, the OLU may be used together with the optical transceiver in the prior art as shown in Figure 5, wherein, compared with Figure 4, the following components are added: an optical signal transmitting module 2 which has no shared optical source; a wavelength division multiplexer/demultiplexer 3, which is adapted to multiplex the downlink signals output from a plurality of optical transmitting modules on the OLT side, and demultiplex the uplink signals from the ONUs; a wavelength division multiplexer/demultiplexer 4, which is adapted to multiplex a plurality of uplink signals from the ONU side, and demultiplex the downlink signals from the OLTs; an optical receiving module 5, which is adapted to receive the optical signal from the optical signal transmitting module 2 which has no shared optical source. Wherein, during the downlink transmission, the spectrum of the signal transmitted in the optical fiber segment between the wavelength division multiplexer/demultiplexer 3 and the wavelength division multiplexer/demultiplexer 4 is as shown in Figure 6(a); and during the downlink transmission, the spectrum of the signal between the wavelength division multiplexer/demultiplexer 4 and the receiving module 6 is as shown in Figure 6(b).

The modulator 14 is a subcarrier modulator (SCM). Therefore, compared with the central wavelength of the continuous light, the central wavelength of the output light of the modulator 14 has an offset of Δλ (the offset may be a positive offset, or may be a negative offset, and the value of the Δλ may be determined according to the wavelength resolution of the optical demultiplexer 61). A mixed light of the continuous light with a central wavelength λ and the signal light with a central wavelength λ±Δλ is output from port II of the circular 15.

Furthermore, the solution according to the embodiments of the invention in which the signal is modulated with subcarrier is different from the solution of the subcarrier modulated electronic heterodyne beat-frequency demodulation in the prior art. The solution of the subcarrier modulated electronic heterodyne beat-frequency demodulation is as shown in Figure 7a. On the ONU side, photoelectric detection is firstly performed for the optical signal received, and the optical signal is converted into the electrical signal; the desired electrical signal is obtained by carrier multiplication demodulation, and then the information data is obtained after filtering with an electrical filter. The solution of all optical detection subcarrier demodulation is as shown in Figure 7b, which includes an optical filter 71 and an optical detector 72. The optical filter 71 allows the signal in the operating frequency band to pass, and the optical signal is converted to the electrical signal via the optical detector 72. In Figure 7b, f_{c} is the central frequency of the optical carrier, and f₁ and f₂ are subcarrier frequencies.

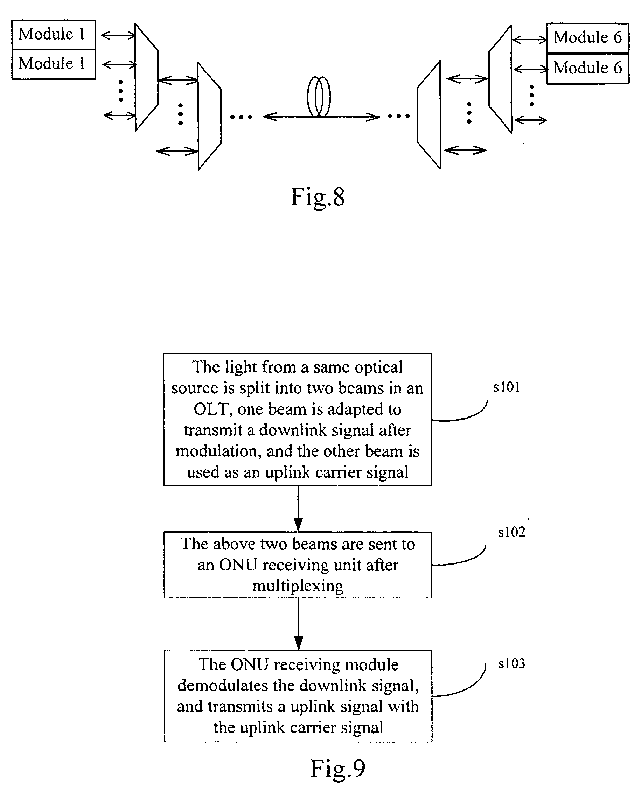

Furthermore, with a plurality of optical multiplexers, a large scale cascade of a plurality of OLT transmitting modules may be realized, as shown in Figure 8. The OLT includes a plurality of OLT transmitting modules, and each ONU includes an ONU receiving module. A one-to-one mapping is established between the OLT transmitting module and the ONU receiving module.

Furthermore, the OLT may further include a transmitting module which provides no shared optical source, and the ONU may further include a receiving module corresponding to the above transmitting module.

A method for realizing the WDM-PON according to an embodiment of the invention is shown in Figure 9, which includes:
S101: Splitting the light from a same optical source into two beams in an OLT, one beam is adapted to transmit a downlink signal after modulation, and the other beam is used as an uplink carrier signal; wherein, the modulation is a subcarrier modulation.
S102: The two beams are sent to an ONU receiving unit after optical multiplexing.
S103: The ONU receiving module demodulates the downlink signal, and transmits an uplink signal with the uplink carrier signal; when the subcarrier modulation is adopted in S101; the ONU receiving module demodulates the modulated signal with all optical detection subcarrier demodulation.

Additional modifications and equal substitutions, such as implementing the invention with a two-fiber bi-directional network architecture, will readily occur to those skilled in the art. Therefore, the invention in its broader aspects is not limited to the specific details and representative embodiments shown and described above. Accordingly, various modifications and variations may be made without departing from the scope of the invention.

## Claims

1. A wavelength division multiplexing passive optical network, comprising an optical line terminal and at least one optical network unit, wherein:
the optical line terminal comprises at least one optical transmitting module (1), the optical network unit comprises an optical receiving module (6), a one-to-one mapping is established between the optical transmitting module (1) and the optical receiving module (6);
the optical transmitting module (1) is adapted to split a light with a wavelength of λ from the same optical source into two optical signals, a first optical signal is modulated and used as a downlink carrier signal, and a second optical signal unchanged loops back from the optical network unit, and is used as an uplink carrier signal,
wherein the optical transmitting module (1) of the optical line terminal comprises: a shared optical source (11), an optical splitter (12), an optical multiplexer (13), a modulator (14), a division selector (15) and an optical receiver (16); wherein,
the optical splitter (12) is adapted to split a continuous light with a wavelength of λ from the optical source into the two optical signals, the first optical signal enters the modulator (14) as the downlink carrier signal, and the second optical signal enters the optical multiplexer (13) directly;
the modulator (14) is adapted to modulate a downlink signal to the first optical signal and then input a modulated downlink signal to the optical multiplexer (13), where a central wavelength of the modulated downlink signal has an offset of a preset value Δλ compared with a central wavelength of the second optical signal;
the optical multiplexer (13) is adapted to multiplex the modulated downlink signal with the second optical signal, and send a multiplexed signal to the optical network unit via the division selector (15); and the optical receiver (16) is adapted to receive an uplink signal sent by the optical network unit via the division selector (15);
the optical receiving module (6) is adapted to receive the multiplexed signal comprising the modulated downlink signal and the second optical signal from the optical transmitting module (1), separate the multiplexed signal and use the second optical signal received as the uplink carrier signal to transmit the uplink signal.

2. The wavelength division multiplexing passive optical network according to claim 1, wherein the optical receiving module (6) of the optical network unit comprises: an optical demultiplexer (61), an optical network unit receiver (62), a division selector (63) and an uplink signal modulator (64); wherein,
the optical demultiplexer (61) is adapted to separate the uplink carrier signal from the modulated downlink signal sent by the optical transmitting module (1);
the optical network unit receiver (62) is adapted to receive the modulated downlink signal;
the division selector (63) is adapted to send the uplink carrier signal to the uplink signal modulator (64); and
the uplink signal modulator (64) is adapted to use the uplink carrier signal to modulate the uplink signal, and send a modulated uplink signal to the optical line terminal via the optical demultiplexer (61).

3. The wavelength division multiplexing passive optical network according to claim 2, wherein the optical network unit receiver (62) further comprises:
a demodulator, adapted to demodulate the modulated downlink signal received.

4. The wavelength division multiplexing passive optical network according to claim 3, wherein the demodulator is an all optical detection subcarrier demodulator or a subcarrier modulated electronic heterodyne beat-frequency demodulator.

5. The wavelength division multiplexing passive optical network according to claim 4, wherein the all optical detection subcarrier demodulator comprises: an optical filter (71) and an optical detector (72),
the optical filter (71) allows an optical signal in an operating frequency band to pass, and the optical signal is converted to a electrical signal via the optical detector (72).

6. The wavelength division multiplexing passive optical network according to claim 1 or 2, wherein the division selector (15, 63) is a circulator.

7. The wavelength division multiplexing passive optical network according to claim 1, wherein the optical line terminal further comprises another transmitting module (2) which has no shared optical source, the optical network unit further comprises another receiving module (5) corresponding to the another transmitting module (2).

8. The wavelength division multiplexing passive optical network according to claim 1 or 7, wherein the network further comprises:
wavelength division multiplexer/demultiplexers (3, 4), arranged on an optical line terminal side and on an optical network unit side, and adapted to perform multiplexing and demultiplexing of a downlink signal or the uplink signal respectively.

9. An optical line terminal, comprising:
an optical transmitting module (1), adapted to split a light with a wavelength of λ from the same optical source into two optical signals, a first optical signal is modulated and used as a downlink carrier signal, and a second optical signal unchanged loops back from an optical network unit, and is used as an uplink carrier signal; wherein the optical transmitting module (1) of the optical line terminal comprises: a shared optical source (11), an optical splitter (12), an optical multiplexer (13), a modulator (14), a division selector (15) and an optical receiver (16); wherein,
the optical splitter (12) is adapted to split a continuous light with a wavelength of λ from the optical source into the two optical signals, the first optical signal enters the modulator (14) as the downlink carrier signal, and the second optical signal enters the optical multiplexer (13) directly;
the modulator (14) is adapted to modulate a downlink signal to the first optical signal and then input a modulated downlink signal to the optical multiplexer (13), where a central wavelength of the modulated downlink signal has an offset of a preset value Δλ compared with a central wavelength of the second optical signal;
the optical multiplexer (13) is adapted to multiplex the modulated downlink signal with the second optical signal, and send a multiplexed signal to the optical network unit via the division selector (15); and
the optical receiver (16) is adapted to receive the uplink signal sent by the optical network unit via the division selector (15).

10. The optical line terminal according to claim 9, wherein the optical line terminal further comprises another transmitting module (2) that has no shared optical source.

11. A method for implementing a wavelength division multiplexing passive optical network, comprising:
Splitting (s101) a light with a wavelength of λ from the same optical source into two optical signals at an optical line terminal, taking a first optical signal modulated as a downlink signal after modulation, and taking a second optical signal unchanged as an uplink carrier signal, wherein, after modulation a central wavelength of the modulated first optical signal has an offset of a preset value Δλ compared with a central wavelength of the second optical signal;
Multiplexing (s102) the modulated first optical signal with the second optical signal, and sending a multiplexed signal to a receiving module of an optical network unit; and
Receiving (s103), by the receiving module of the optical network unit, the multiplexed signal, and separating the multiplexed signal into the first modulated optical signal and the second optical signal, sending an uplink signal with the second optical signal.

12. The method for implementing a wavelength division multiplexing passive optical network according to claim 11, wherein the modulation is a subcarrier modulation.

13. The method for implementing a wavelength division multiplexing passive optical network according to claim 12, wherein a subcarrier demodulation comprises an all optical detection subcarrier demodulation and a subcarrier modulated electronic heterodyne beat-frequency demodulation.

## Patentansprüche

1. Passives optisches Wellenlängenmultiplex-Netz, das einen optischen Leitungsabschluss und wenigstens eine optische Netzeinheit umfasst, wobei:
der optische Leitungsabschluss wenigstens ein optisches Sendemodul (1) umfasst, die optische Netzeinheit ein optisches Empfangsmodul (6) umfasst und eine Eins-zu-Eins-Abbildung zwischen dem optischen Sendemodul (1) und dem optischen Empfangsmodul (6) aufgebaut wird;
das optische Sendemodul (1) dafür ausgelegt ist, Licht mit einer Wellenlänger λ von derselben Lichtquelle in zwei optische Signale zu teilen, wobei ein erstes optisches Signal moduliert und als ein Abwärtsstreckenträgersignal verwendet wird und ein zweites optisches Signal unverändert von der optischen Netzeinheit zurückgeschleift und als ein Aufwärtsstreckenträgersignal verwendet wird,
wobei das optische Sendemodul (1) des optischen Leitungsabschlusses Folgendes umfasst: eine gemeinsam genutzte Lichtquelle (11), einen optischen Teiler (12), einen optischen Multiplexer (13), einen Modulator (14), einen Unterteilungsselektor (15) und einen optischen Empfänger (16); wobei
der optische Teiler (12) dafür ausgelegt ist, Dauerlicht mit einer Wellenlänge λ von der Lichtquelle in zwei optische Signale zu teilen, wobei das erste optische Signal in den Modulator (14) als ein Abwärtsstreckenträgersignal eintritt und das zweite optische Signal direkt in den optischen Multiplexer (13) eintritt;
wobei der Modulator (14) dafür ausgelegt ist, ein Abwärtsstreckensignal in das erste optische Signal zu modulieren und dann ein moduliertes Abwärtsstreckensignal in den optischen Multiplexer (13) einzugeben, wobei eine Mittelwellenlänge des modulierten Abwärtsstreckensignals einen Versatz mit einem im Voraus eingestellten Wert Δλ im Vergleich zu einer Mittelwellenlänge des zweiten optischen Signals hat;
wobei der optische Multiplexer (13) dafür ausgelegt ist, das modulierte Abwärtsstreckensignal mit dem zweiten optischen Signal zu multiplexieren und ein multiplexiertes Signal über den Unterteilungsselektor (15) zu der optischen Netzeinheit zu senden; und
wobei der optische Empfänger (16) dafür ausgelegt ist, ein Aufwärtsstreckensignal, das von der optischen Netzeinheit gesendet wird, über den Unterteilungsselektor (15) zu empfangen;
wobei das optische Empfangsmodul (6) dafür ausgelegt ist, das multiplexierte Signal, das das modulierte Abwärtsstreckensignal und das zweite optische Signal enthält, von dem optischen Sendemodul (1) zu empfangen, das multiplexierte Signal zu trennen und das empfangene zweite optische Signal als das Aufwärtsstreckenträgersignal zu verwenden, um das Aufwärtsstreckensignal zu senden.

2. Passives optisches Wellenlängenmultiplex-Netz nach Anspruch 1, wobei das optische Empfangsmodul (6) der optischen Netzeinheit Folgendes umfasst: einen optischen Demultiplexer (61), einen optischen Netzeinheit-Empfänger (62), einen Unterteilungsselektor (63) und einen Aufwärtsstreckensignalmodulator (64); wobei der optische Demultiplexer (61) dafür ausgelegt ist, das Aufwärtsstreckenträgersignal von dem modulierten Abwärtsstreckensignal, das durch das optische Sendemodul (1) gesendet wird, zu trennen;
der optische Netzeinheit-Empfänger (62) dafür ausgelegt ist, das modulierte Abwärtsstreckensignal zu empfangen;
der Unterteilungsselektor (63) dafür ausgelegt ist, das Aufwärtsstreckenträgersignal zu dem Aufwärtsstreckensignalmodulator (64) zu senden; und
der Aufwärtsstreckensignalmodulator (64) dafür ausgelegt ist, das Aufwärtsstreckenträgersignal zu verwenden, um das Aufwärtsstreckensignal zu modulieren, und ein moduliertes Aufwärtsstreckensignal zu dem optischen Leitungsabschluss über den optischen Demultiplexer (61) zu senden.

3. Passives optisches Wellenlängenmultiplex-Netz nach Anspruch 2, wobei der optische Netzeinheit-Empfänger (62) ferner Folgendes umfasst:
einen Demodulator, der dafür ausgelegt ist, das empfangene modulierte Abwärtsstreckensignal zu demodulieren.

4. Passives optisches Wellenlängenmultiplex-Netz nach Anspruch 3, wobei der Demodulator ein Unterträgerdemodulator für rein optische Detektion oder ein Demodulator für eine mit einem Unterträger modulierte elektronische Heterodyn-Schwebungsfrequenz ist.

5. Passives optisches Wellenlängenmultiplex-Netz nach Anspruch 4, wobei der Unterträgerdemodulator für rein optische Detektion Folgendes umfasst: ein optisches Filter (71) und einen optischen Detektor (72),
wobei das optische Filter (71) den Durchgang eines optischen Signals in einem Betriebsfrequenzband zulässt und das optische Signal über den optischen Detektor (72) in ein elektrisches Signal umgesetzt wird.

6. Passives optisches Wellenlängenmultiplex-Netz nach Anspruch 1 oder 2, wobei der Unterteilungsselektor (15, 63) ein Zirkulator ist.

7. Passives optisches Wellenlängenmultiplex-Netz nach Anspruch 1, wobei der optische Leitungsabschluss ferner ein weiteres Sendemodul (2) umfasst, das keine gemeinsam genutzte Lichtquelle besitzt, wobei die optische Netzeinheit ferner ein weiteres Empfangsmodul (5) umfasst, das dem weiteren Sendemodul (2) entspricht.

8. Passives optisches Wellenlängenmultiplex-Netz nach Anspruch 1 oder 7, wobei das Netz ferner Folgendes umfasst:
Wellenlängenmultiplexer/Wellenlängendemultiplexer (3, 4), die auf Seiten eines optischen Leitungsabschlusses bzw. auf Seiten einer optischen Netzeinheit angeordnet sind und dafür ausgelegt sind, ein Multiplexieren und Demultiplexieren eines Abwärtsstreckensignals bzw. des Aufwärtsstreckensignals auszuführen.

9. Optischer Leitungsabschluss, der Folgendes umfasst:
ein optisches Sendemodul (1), das dafür ausgelegt ist, Licht mit einer Wellenlänge von derselben Lichtquelle in zwei optische Signale zu teilen, wobei ein erstes optisches Signal moduliert wird und als ein Abwärtsstreckenträgersignal verwendet wird und ein zweites optisches Signal unverändert von einer optischen Netzeinheit zurückgeschleift und als ein Aufwärtsstreckenträgersignal verwendet wird; wobei das optische Sendemodul (1) des optischen Leitungsabschlusses Folgendes umfasst: eine gemeinsam genutzte Lichtquelle (11), einen optischen Teiler (12), einen optischen Multiplexer (13), einen Modulator (14), einen Unterteilungsselektor (15) und einen optischen Empfänger (16); wobei
der optische Teiler (12) dafür ausgelegt ist, Dauerlicht mit einer Wellenlänge λ von der Lichtquelle in zwei optische Signale zu teilen, wobei das erste optische Signal in den Modulator (14) als das Abwärtsstreckenträgersignal eintritt und das zweite optische Signal direkt in den optischen Multiplexer (13) eintritt;
der Modulator (14) dafür ausgelegt ist, ein Abwärtsstreckensignal auf das erste optische Signal zu modulieren und dann ein moduliertes Abwärtsstreckensignal in den optischen Multiplexer (13) einzugeben, wobei eine Mittelwellenlänge des modulierten Abwärtsstreckensignals einen Versatz mit einem im Voraus eingestellten Wert Δλ im Vergleich zu einer Mittelwellenlänge des zweiten optischen Signals besitzt;
der optische Multiplexer (13) dafür ausgelegt ist, das modulierte Abwärtsstreckensignal mit dem zweiten optischen Signal zu multiplexieren und ein multiplexiertes Signal über den Unterteilungsselektor (15) zu der optischen Netzeinheit zu senden; und
der optische Empfänger (16) dafür ausgelegt ist, das von der optischen Netzeinheit über den Unterteilungsselektor (15) gesendete Aufwärtsstreckensignal zu empfangen.

10. Optischer Leitungsabschluss nach Anspruch 9, wobei der optische Leitungsabschluss ferner ein weiteres Sendemodul (2) umfasst, das keine gemeinsam genutzte Lichtquelle besitzt.

11. Verfahren zum Implementieren eines passiven optischen Wellenlängenmultiplex-Netzes, das Folgendes umfasst:
Teilen (s101) von Licht mit einer Wellenlänge λ von derselben Lichtquelle in zwei optische Signale bei einem optischen Leitungsabschluss, Verwenden eines modulierten ersten optischen Signals als ein Abwärtsstreckensignal nach der Modulation und Verwenden eines unveränderten zweiten optischen Signals als ein Aufwärtsstreckenträgersignal, wobei nach der Modulation eine Mittelwellenlänge des modulierten ersten optischen Signals einen Versatz mit einem im Voraus eingestellten Wert Δλ im Vergleich zu einer Mittelwellenlänge des zweiten optischen Signals hat;
Multiplexieren (s102) des modulierten ersten optischen Signals mit dem zweiten optischen Signal und Senden eines multiplexierten Signals zu einem Empfangsmodul einer optischen Netzeinheit; und
Empfangen (s103) durch das Empfangsmodul der optischen Netzeinheit des multiplexierten Signals und Trennen des multiplexierten Signals in das erste modulierte optische Signal und das zweite optische Signal und Senden des Aufwärtsstreckensignals mit dem zweiten optischen Signal.

12. Verfahren zum Implementieren eines passiven optischen Wellenlängenmultiplex-Netzes nach Anspruch 11, wobei die Modulation eine Unterträgermodulation ist.

13. Verfahren zum Implementieren eines passiven optischen Wellenlängenmultiplex-Netzes nach Anspruch 12, wobei eine Unterträgerdemodulation eine Unterträgerdemodulation mit rein optischer Detektion und eine Demodulation einer mit einem Unterträger modulierten elektronischen Heterodyn-Schwebungsfrequenz umfasst.

## Revendications

1. Réseau optique passif à multiplexage par répartition en longueur d'onde, comprenant un terminal de ligne optique et au moins une unité de réseau optique, dans lequel :
le terminal de ligne optique comprend au moins un module d'émission optique (1), l'unité de réseau optique comprend un module de réception optique (6), une mise en correspondance biunivoque est établie entre le module d'émission optique (1) et le module de réception optique (6) ;
le module d'émission optique (1) est apte à diviser une lumière de longueur d'onde λ provenant d'une même source optique entre deux signaux optiques, un premier signal optique est modulé et utilisé en tant que signal de porteuse de liaison descendante, et un second signal optique est renvoyé inchangé par l'unité de réseau optique, et est utilisé en tant que signal de porteuse de liaison montante,
dans lequel le module de liaison optique (1) du terminal de ligne optique comprend :
une source optique partagée (11), un diviseur optique (12), un multiplexeur optique (13), un modulateur (14), un sélecteur de répartition (15) et un récepteur optique (16) ; dans lequel
le diviseur optique (12) est apte à diviser une lumière continue de longueur d'onde λ provenant de la source optique en les deux signaux optiques, le premier signal optique pénètre dans le modulateur (14) en tant que signal de porteuse de liaison descendante, et le second signal optique pénètre directement dans le multiplexeur (13) ;
le modulateur (14) est apte à moduler un signal de liaison descendante en le premier signal optique puis à fournir en entrée un signal de liaison descendante modulé au multiplexeur optique (13), une longueur d'onde centrale du signal de liaison descendante modulé présentant un décalage d'une valeur prédéfinie Δλ par comparaison à une longueur d'onde centrale du second signal optique ;
le multiplexeur optique (13) est apte à multiplexer le signal de liaison descendante modulé avec le second signal optique et à envoyer un signal multiplexé à l'unité de réseau optique via le sélecteur de répartition (15) ; et
le récepteur optique (16) est apte à recevoir un signal de liaison montante envoyé par l'unité de réseau optique via le sélecteur de répartition (15) ;
le module de réception optique (6) est apte à recevoir le signal multiplexé comprenant le signal de liaison descendante modulé et le second signal optique en provenance du module d'émission optique (1), à séparer le signal multiplexé et à utiliser le second signal optique reçu en tant que signal de porteuse de liaison montante pour émettre le signal de liaison montante.

2. Réseau optique passif à multiplexage par répartition en longueur d'onde selon la revendication 1, dans lequel le module de réception optique (6) de l'unité de réseau optique comprend : un démultiplexeur optique (61), un récepteur d'unité de réseau optique (62), un sélecteur de répartition (63) et un modulateur de signal de liaison montante (64) ; dans lequel
le démultiplexeur optique (61) est apte à séparer le signal de porteuse de liaison montante du signal de liaison montante modulé envoyé par le module d'émission optique (1) ;
le récepteur d'unité de réseau optique (62) est apte à recevoir le signal de liaison descendante modulé,
le sélecteur de répartition (63) est apte à envoyer le signal de porteuse de liaison montante au modulateur de signal de liaison montante (64) ; et
le modulateur de signal de liaison montante (64) est apte à utiliser le signal de porteuse de liaison montante pour moduler le signal de liaison montante et envoyer un signal de liaison montante modulé au terminal de ligne optique via le démultiplexeur optique (61).

3. Réseau optique passif à multiplexage par répartition en longueur d'onde selon la revendication 2, dans lequel le récepteur d'unité de réseau optique (62) comprend en outre :
un démodulateur, apte à démoduler le signal de liaison descendante modulé reçu.

4. Réseau optique passif à multiplexage par répartition en longueur d'onde selon la revendication 3, dans lequel le démodulateur est un démodulateur de sous-porteuse de détection tout optique ou un démodulateur de fréquence de battement hétérodyne électronique à sous-porteuse modulée.

5. Réseau optique passif à multiplexage par répartition en longueur d'onde selon la revendication 4, dans lequel le démodulateur de sous-porteuse à détection tout optique comprend : un filtre optique (71) et un détecteur optique (72),
le filtre optique (71) laisse passer un signal optique se situant dans une bande de fréquences de fonctionnement et le signal optique est converti en un signal électrique via le détecteur optique (72).

6. Réseau optique passif à multiplexage par répartition en longueur d'onde selon la revendication 1 ou 2, dans lequel le sélecteur de répartition (15, 63) est un circulateur.

7. Réseau optique passif à multiplexage par répartition en longueur d'onde selon la revendication 1, dans lequel le terminal de ligne optique comprend en outre un autre module d'émission (2) ne comportant pas de source optique partagée, l'unité de réseau optique comprenant en outre un autre module de réception (5) correspondant audit autre module d'émission (2).

8. Réseau optique passif à multiplexage par répartition en longueur d'onde selon la revendication 1 ou 7, dans lequel le réseau comprend en outre :
des multiplexeurs/démultiplexeurs à répartition en longueur d'onde (3, 4) disposés du côté d'un terminal de ligne optique et du côté d'une unité de réseau optique, et aptes à effectuer respectivement le multiplexage et le démultiplexage d'un signal de liaison descendante ou du signal de liaison montante.

9. Terminal de ligne optique, comprenant :
un module d'émission optique (1), apte à diviser une lumière de longueur d'onde λ provenant d'une même source optique en deux signaux optiques, un premier signal optique est modulé et utilisé en tant que signal de porteuse de liaison descendante, et un second signal optique est renvoyé inchangé par l'unité de réseau optique, et est utilisé en tant que signal de porteuse de liaison montante ; dans lequel le module d'émission optique (1) du terminal de ligne optique comprend : une source optique partagée (11), un diviseur optique (12), un multiplexeur optique (13), un modulateur (14), un sélecteur de répartition (15) et un récepteur optique (16) ; dans lequel le diviseur optique (12) est apte à diviser une lumière continue de longueur d'onde λ provenant de la source optique en les deux signaux optiques, le premier signal optique pénètre dans le modulateur (14) en tant que signal de porteuse de liaison descendante, et le second signal optique pénètre directement dans le multiplexeur optique (13) ;
le modulateur (14) est apte à moduler un signal de liaison descendante en le premier signal optique puis à fournir en entrée un signal de liaison descendante modulé au multiplexeur optique (13), une longueur d'onde centrale du signal de liaison descendante modulé présentant un décalage d'une valeur prédéfinie Δλ par comparaison à une longueur d'onde centrale du second signal optique ;
le multiplexeur optique (13) est apte à multiplexer le signal de liaison descendante modulé avec le second signal optique et à envoyer un signal multiplexé à l'unité de réseau optique via le sélecteur de répartition (15) ; et
le récepteur optique (16) est apte à recevoir le signal de liaison montante envoyé par l'unité de réseau optique via le sélecteur de répartition (15).

10. Terminal de ligne optique selon la revendication 9, dans lequel le terminal de ligne optique comprend en outre un autre module d'émission (2) n'ayant pas de source optique partagée.

11. Procédé destiné à mettre en oeuvre un réseau optique passif à multiplexage par répartition en longueur d'onde, consistant à :
diviser (s101) une lumière de longueur d'onde λ provenant d'une même source optique en deux signaux optiques au niveau d'un terminal de ligne optique, prendre un premier signal optique modulé en tant que signal de liaison descendante après modulation, et prendre un second signal optique inchangé en tant que signal de porteuse de liaison montante, dans lequel, après modulation, une longueur d'onde centrale du premier signal optique modulé présente un décalage ayant une valeur prédéfinie Δλ par comparaison à une longueur d'onde centrale du second signal optique ;
multiplexer (s102) le premier signal optique modulé avec le second signal optique, et envoyer un signal multiplexé à un module de réception d'une unité de réseau optique ; et
recevoir (s103), par le module de réception d'unité de réseau optique, le signal multiplexé, séparer le signal multiplexé en le premier signal optique modulé et le second signal optique modulé, et envoyer un signal de liaison montante avec le second signal optique.

12. Procédé de mise en oeuvre d'un réseau optique passif à multiplexage par répartition en longueur d'onde selon la revendication 11, dans lequel la modulation est une modulation de sous-porteuse.

13. Procédé de mise en oeuvre d'un réseau optique passif à multiplexage par répartition en longueur d'onde selon la revendication 12, dans lequel une démodulation de sous-porteuse comprend une démodulation de sous-porteuse à détection tout optique et une démodulation de fréquence de battement hétérodyne électronique à sous-porteuse modulée.
